**Europäisches Patentamt**

**European Patent Office**

**Office européen des brevets**

(19)

(11) **EP 1 071 258 B1**

(12) **EUROPEAN PATENT SPECIFICATION**

(45) Date of publication and mention
of the grant of the patent:
**20.07.2005   Bulletin 2005/29**

(51) Int Cl.⁷: **H04L 29/06**, G06F 17/30

(21) Application number: **99401812.5**

(22) Date of filing: **20.07.1999**

(54) **User access monitoring in internet**

Benutzerzugangsüberwachung in Internet

Surveillance des access des utilisateurs dans l'internet

(84) Designated Contracting States:
**AT BE CH CY DE DK ES FI FR GB GR IE IT LI LU
MC NL PT SE**

(43) Date of publication of application:
**24.01.2001   Bulletin 2001/04**

(73) Proprietors:
- **TEXAS INSTRUMENTS INC.**
  **Dallas, Texas 75243 (US)**
  Designated Contracting States:
  **BE CH DE DK ES FI GB GR IE IT LI LU MC NL AT
  CY SE PT**
- **TEXAS INSTRUMENTS FRANCE**
  **06271 Villeneuve Loubet Cédex (FR)**
  Designated Contracting States:
  **FR**

(72) Inventor: **Thomas, David R.**
  **06650 Opio (FR)**

(74) Representative: **Potter, Julian Mark**
  **D Young & Co**
  **120 Holborn**
  **London EC1N 2DY (GB)**

(56) References cited:
  **EP-A- 0 843 269**          **US-A- 5 727 129**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to computer systems. In particular, but not exclusively, to computer systems operable within the Internet.

To enhance their functionality, and to share resources, for example printers, scanners, etc, individual computer systems are often linked together to form computer networks. Such networks may be limited to individual organisations, and even to discrete geographical locations for that organisation. For example, a particular building or even floor within a building. However, some computer networks comprise computer systems which are geographically located a greater distance from each other, even for example in other countries. Often, such large area networks are not limited to individual computer systems, but link computer networks, so that a large area network of computer networks is formed.

A particularly important example of such a network of networks is the Internet. The Internet comprises a network of computer systems and computer system networks spanning substantially the whole of the developed world. No one organisation owns or is responsible for the Internet as a whole. The computer systems and computer networks linked together by the Internet may be owned and operated by different organisations. Each computer system within the Internet has a unique address and can communicate with other computer systems within the Internet by using the other system's address. The format for communication between computer systems on the Internet is defined by the Internet Protocol (IP), in order to ensure that all the systems on the Internet can understand and communicate with each other. The telecommunication systems utilised by the Internet may comprise ISDN services, Plain Old Telephone Systems (POTS), mobile or wireless communication systems such as cellular or satellite radio telephone systems, cable communication or any other suitable telecommunications medium.

A particularly useful piece of software for computer networks is something known as the World Wide Web (WWW). The WWW is most often used with the Internet, which fully utilises its functionality, but the software may also be used with other networks.

The term WWW is also used to refer to the body of information embodied in different media such as text, audio or video, for example, and stored on computer systems within the computer network, for example computer systems forming part of the Internet. The information is divided up into suitable segments, typically relating to the nature of the information, for example, an image may be formed as a graphics file, and a document as a text file. Additionally, such information may also comprise so-called Web pages which are datafiles comprising information, which may comprise different media, and instructions on how to format that information when it is displayed on a computer screen. Within the WWW, not only do individual computer systems have addresses, but individual pieces of information. Thus, by setting the correct address, it is possible from one computer system to access not just another computer system but a particular piece of information stored on that computer system. In the following the term "entity" shall be used to refer to any addressable information within a network including documents, websites and pages and parts thereof, text, audio and video files for example. In the terminology of the WWW, the address of an entity is known as a Uniform Resource Locator (URL).

The previously-mentioned entities (Web pages) are often accessed by users of the WWW, and often comprise electronic versions of newspapers or journals, for example. Often, the computer system at which a particular entity resides is geographically distant from the computer system of a user who wishes to access that entity. Additionally, the telecommunications system over which such access must be made may be a particularly busy communication system. Consequently, it is often the case that accessing a desired entity and downloading it to the user's computer system is a lengthy process. Not only is the time delay irritating to a user, but it may be costly since the user is likely to be paying local telephone company charges for or during that access time. The entity is typically downloaded and cached on the user's computer system i.e. (stored in the user's computer system local memory, e.g. internal hard disk drive), in order to release the telecommunications link and the entity server, and allow the user to then review the entity stored on their own computer system, for example on the hard drive.

The delay and cost in accessing entities, over the Internet is inhibiting the development and use of the Internet, in particular by consumers.

A known system which seeks to address the aforementioned problems comprises a Web TV produced by NEC incorporating a NAVIO TV navigator produced by NAVIO Communications Inc. In this known system, a user's computer system hard disk is updated with Web pages (entities) defined by so-called bookmarks of the user at regular intervals. In this context "bookmarks" are a list of entity addresses stored in a user's computer system, and forming a part of a "dropdown" menu such that when the menu is activated the list of addresses is displayed and a user can "click" on an address to automatically access that entity.

The system updates the hard disk drive at midnight each day. However, if entities do not have a low activity at night, for example they are located in countries in a different time zone where the time may be during the middle of the working day, the access time for the entitieses may be relatively long. Since the proposed system envisages accessing somewhere between 5,000 to 10,000 entities (web pages) each time, it is evident that significant time would be required and therefore costs incurred, for downloading the entities. Additionally, the proposed system assumes that bookmarks accurately represent the computer system user's current requirements and desires. However, it is common that a user does not delete bookmarks when they are no longer interested in the particular topic, but retains them until such time as the file comprising the bookmarks is of unreadable or unusable size and then removes unwanted bookmarks. Furthermore, the more successful or more common the system, the greater the problem regarding access times since one will have many systems within a particular time zone accessing or using the Internet at the same time.

United States patent no. 5,727,129 describes a network system for profiling and actively facilitating use of activities. The system and method are provided for use with a communication and information network, such as the Internet World Wide Web, for assisting a user m accessing information stored at remote network sites based on the user's past history of network usage. An archive is maintained of remote sites accessed and instances in which the same remote sites are accessed in sequence. Statistics regarding information such as the number of times a site has been accessed, and the times a given set of sites have been accessed in sequence, are maintained. This information may be displayed on command. Based on this information, information items are identified which the user is predicted to be likely to want to access. This information is pre-downloaded, without express user command, so that if the user does enter a command, the response time is advantageously fast.

The embodiments in accordance with the present invention seek to ameliorate and address at least some of the aforementioned drawbacks and problems.

Particular and preferred aspects of the invention are set out in the accompanying independent claims.

An embodiment in accordance with a first aspect of the invention provides a method for operating a computer system linkable to at least one of a plurality of addressable entities in a computer network, the method comprising:

deriving a count value corresponding to a number of accesses to an address associated with a one of said plurality of addressable entities; and automatically storing local to said computer system data comprising said one of a plurality of said addressable entities for said count value exceeding a threshold value, said automatically storing being initiated at a predetermined frequency in accordance with an update interval for said one of a plurality of addressable entities.

An embodiment in accordance with a second aspect of the present invention provides apparatus operable to communicate with at least one of a plurality of addressable entities within a computer network, comprising:

communication means for communicating with at least one of said plurality of addressable entities; means for deriving a count value corresponding to a number of accesses to said at least one of a plurality of addressable entities; and means for automatically storing local to said apparatus data comprising said one of a plurality of addressable entities for said count value exceeding a threshold value at a predetermined frequency in accordance with an update interval for said one of a plurality of addressable entities.

Embodiments in accordance with the first and second aspects of the invention respectively provide a method of operating a computer system and apparatus, in which the frequency of access to particular entities may be monitored and the most popular, according to a user-defined criterion for example, are regularly cached to a memory local to the computer system, in order to provide substantially instant access to the relevant entity information next time the user accesses it. Thus, the user does not have to sit and wait for entity data to be downloaded over the computer network each time he accesses the entity, and therefore is able to save considerable amounts of time.

In preferred embodiments of the invention, access to one of the plurality of entities is monitored and a count value corresponding to an access to one of the plurality of entities is updated for each access. In this respect, it should be noted that if an access is made to a URL which is at a lower domain level than a pre-existing URL, then the count value for the pre-existing URL is updated for the access to the lower domain level URL. Optionally, separate counts may be made for each specific URL accessed by a user. An advantage of the first option is that it reduces the number of times access has to be made to an entity since the highest level domain information is stored.

Preferably, the periodicity of access to the entities is determined. Such periodicity is typically measured in days, weeks or months, although sub-units such as hours may also be used if appropriate for the frequency of access. Thus, it is possible to modify a count value to take into account the intervals at which a user accesses the particular entity. Thus, a count value for an entity which is accessed on a monthly basis, but still regularly, that is to say at least once a month, may be ascribed a count value which compares with a entity which is accessed daily. This may be achieved by modifying the count value corresponding to an access to an entity by an amount determined by the periodicity of accesses.

Typically, the count value is updated in count intervals of 1, however, where the count value has been modified in accordance with the periodicity of access to the at least one of a plurality of entities, then the count interval for that entity will be greater than 1.

Suitably, a count value is decreased if the time period since a last access to the corresponding entity exceeds a predetermined time interval. Thus, the invention automatically adjusts the count values for the entities in accordance with the user's current access profile. Thus, entities which are no longer of interest to the user, that is to say are no longer being accessed, are gradually removed from the user profile by virtue of their count value being systematically and automatically decreased.

The criterion for automatically storing the computer-implementable instructions and/or data comprising an entity may be for the count value corresponding to that entity exceeding a predetermined threshold value. Thus, any entities which are of sufficient interest to a user such that the number of accesses exceeds that threshold will be automatically stored. Optionally, the predetermined criterion may be that the count value is one of a group of highest count values, for example the 10, 20 or 30 highest count values. In this way, the user access profile becomes a "top 10" etc of user-accessed entities. Such a process advantageously limits the number of entities being cached to the predetermined number, i.e. 10, 20, 30, etc, as desired.

In a particular embodiment, a further or second count value is incremented corresponding to accesses to one of a plurality of entities. The first count value is then incremented for the second count value exceeding threshold value, and then the second count value is reset to zero. Such an embodiment is a suitable way of providing a balance between accesses to entities of different periodicities. For example, an entity whose periodicity is frequent, for example once a day, is likely to be provided with a second count value with a threshold relating to a typical month, i.e. 30. Thus, the first count value upon which the user profile is based, is only incremented every 30 accesses, by virtue of the second count value only initiating increment of the first count value for the second count value reaching the threshold. In this way, access on a daily basis can be balanced with access on a monthly basis, such that the user profile reflects the value of the entities and the consistency of their use, as opposed to the mere frequency of use, which might give mis-leading results.

Suitably, the periodicity with which an entity is updated is determined by inspecting the "last modified date" field in a sub-file for example, associated with the entity. Thus the frequency and/or optimum time for automatically caching that entity to obtain the most up-to-date information may be determined.

Embodiments in accordance with the invention may comprise a computer program comprising machine implementable instructions and/or data for operating a computer system in accordance with the methods described above. Such a computer program may be embodied on a carrier medium such as a magnetic disc, optical disc or semiconductor memory, for example. Optionally, the carrier medium may comprise a radio frequency carrier wave or an optical carrier wave or other carrier wave suitable for telecommunications, in order to provide remote distribution of a computer program embodying the invention.

Specific embodiments in accordance with the present invention will now be described, by way of example only, and with reference to the drawings, in which:

Figure 1 is a schematic illustration of a computer network comprising a server and client computer system;

Figure 2 is a block diagram illustrating the components of a computer system of Figure 1;

Figure 3 is a schematic illustration of a weighted stack in accordance with a first embodiment of the invention;

Figure 4 is a schematic illustration of the weighted stack of Figure 3 after updating;

Figure 5 is a schematic illustration of a data entry format of a weighted stack in accordance with a second embodiment of the invention;

Figure 6 is a schematic illustration of a data entry found for a weighted stack in accordance with a third embodiment of the invention;

Figure 7 illustrates a flowchart for a client module in accordance with a first aspect of the invention for creating an ordered stack of addresses;

Figure 8 illustrates a flowchart for a client module operable for auto-caching;

Figure 9 is a schematic illustration of a data entry format in accordance with a second aspect of the invention; and

Figure 10 illustrates a flowchart for a client module in accordance with a second aspect of the invention.

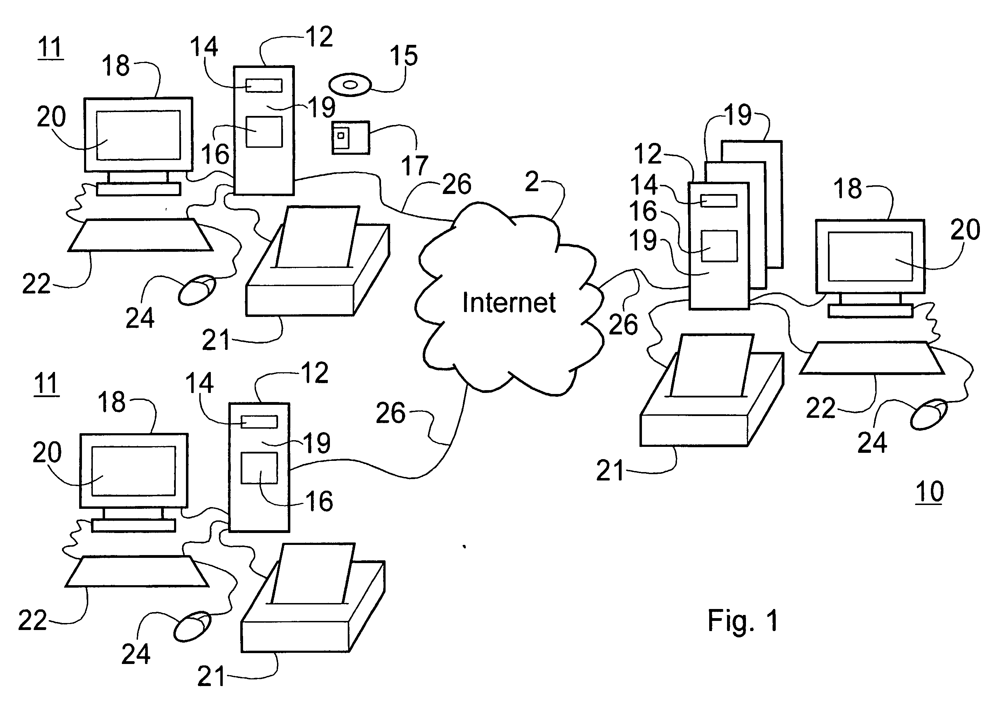

Referring now to Figure 1, there is illustrated a schematic representation of a network of computer systems, such as the Internet, comprising a server computer system 10 and client computer systems 11. Both the server computer system 10 and the client computer system 11 comprise similar components, for example a system unit 12, a display device 18 with a display screen 20, and user input devices, including a keyboard 22 and a mouse 24. A printer 21 is also connected to the system. Each system unit 12 comprises media drives, including an optical disk drive 14, a floppy disk drive 16 and an internal hard disk drive not explicitly shown in Figure 1. A CD-ROM 15 and a floppy disk 17 are also illustrated. Additionally, server computer system 10 comprises high capacity storage media, such as further magnetic hard disk 19, for example.

A program, comprising a sequence of computer-implementable instructions and data, for implementing various functions or conveying various information may be supplied on media such as one or more CD-ROMs and/or floppy disk, then stored on a hard disk, for example. The computer system shown in Figure 1 is also connected 26 to a network 2, which in the illustrated embodiment is the Internet, but may be a local or wide area dedicated or private network, for example. A program or data implementable on a computer system may also be supplied on a telecommunications medium, for example over a telecommunications line by a network and/or the Internet. For a client computer system 11 operating as a mobile terminal over a radio telephone network, the telecommunications medium may be a radio frequency carrier wave carrying suitably encoded signals representing the computer program and data or information. Optionally, the carrier wave may be an optical carrier wave for an optical fibre link or any other suitable carrier medium, for a landline linked telecommunications system. A mains electrical wiring system may also be utilised, for example, for caching information to a portable electronic device, such as a personal Digital Assistant (PDA), when it is coupled to the mains for recharging its batteries.

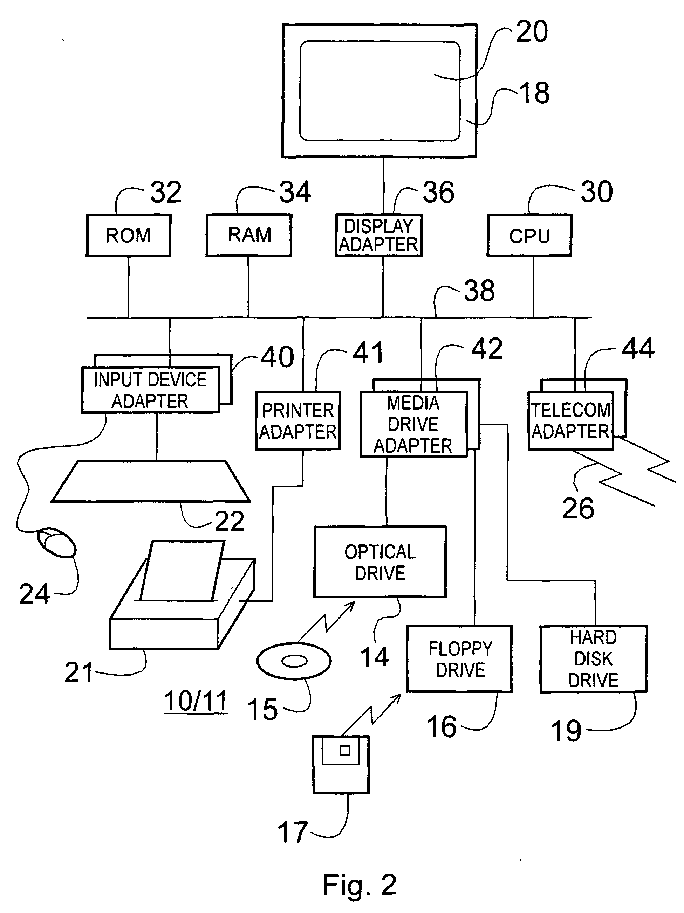

Referring now to Figure 2, there is shown a "schematic and simplified representation of an exemplary implementation of a computer system such as that referred to with reference to Figure 1. As shown in Figure 2, a processor (CPU) 30 is coupled to a bus structure 38. Also connected to the bus structure 38 are read only memory 32 and random access memory 34. A display adaptor 36 connects a display device 18 to the bus structure 38. One or more user-input device adapters 40 connect the user-input devices, including the keyboard 22 and mouse 24 to the bus structure 38. An adapter 41 for the connection of the printer 21 may also be provided. One or more media drive adapters 42 can be provided for connecting the media drives, for example the optical disk drive 14, the floppy disk drive 16 and hard disk drive 19, to the bus structure 38. One or more telecommunications adapters 44 can be provided for connecting the computer system to one or more networks. The communications adapters 44 could include a local area network adapter, a modem and/or ISDN terminal adapter, etc as required.

It will be appreciated that Figures 1 and 2 are schematic representations of one possible implementation of a computer system, suitable for either a server computer system 10 or a client computer system 11. It will be appreciated from the following description of embodiments of the present invention that the computer system in which the invention could be implemented may take many forms. For example, rather than the server computer system 10 comprising a display device 18 and printer 21, it may be merely necessary for the server computer system 10 to comprise a processing unit, and be accessible by client computer systems 11. The client computer may also be a non-PC type of computer which is Internet or network compatible, for example a Web TV, or set-top box for a domestic TV capable of providing access to a computer network such as the Internet. Further applications for the client computer may

be as an "electronic book" or "newspapaer", having suitably daily or weekly updates. Optionally, the client computer may be in the form of a wireless PDA or a multimedia terminal.

Each computer system 10, 11 has a unique address, within the Internet, and in the terminology of the WWW, these addresses are known as Uniform Resource Locators (URLs). Additionally, each entity within the WWW may also have a unique address or URL. An entity may comprise many different types of information, for example text, graphics, audio, video, etc, and is therefore referred to as an hypermedia document or entity. Files comprising a single medium such as a graphics file, audio file, video file, etc may also be found on the WWW and are individually addressable. Within the WWW, hypermedia entities are created and handled using a programming language called Hypertext Markup Language (HTML). HTML provides a method of formatting entities in which the information may be separated from the presentation of the entity. That is to say entities containing the same information may be presented in different ways.

WWW software is based on a client-server architecture. A Web client, for example a browser, is a computer program which can send requests for information, such as documents, to a Web server. A Web server is a program which, in response to a request from a client, sends enitites (documents), or error messages if appropriate, requested back to the requesting client. The Web server resides on server computer system 10. The entity received by the client is stored on the client computer system 11, typically on the hard disk drive 19 in a process known as "caching".

The client program typically resides in the hard disk drive 19 of the client computer system 11, and is operable to configure client computer system 11 to interface with the Internet and WWW.

In a first embodiment in accordance with the invention, the client comprises a software module comprising computer implementable instructions for determining a user access profile to WWW pages or sites. The module utilises the user profile to automatically (auto)-cache entities accessed by the user in accordance with the determined user access profile. Auto-cashing occurs at a suitable time as may be determined by the user, or automatically in accordance with the user access profile.

The user profile is determined by monitoring access to entities initiated by the client. The first time a URL is accessed by the client, the address is stored together with a count value which is initialised to 1. Each time that address is accessed by the client, the count value is increased by 1. Those entities having an access profile value greater than a threshold value, for example, are auto-cached by the client and stored on the client computer system hard disk drive 19 ready for almost instant access the next time the user enters one of the addresses corresponding to the auto-cached entities.

The threshold value may optionally comprise the number of sites to be automatically-cached, such that only the top twenty most accessed sites, for example, are auto-cached.

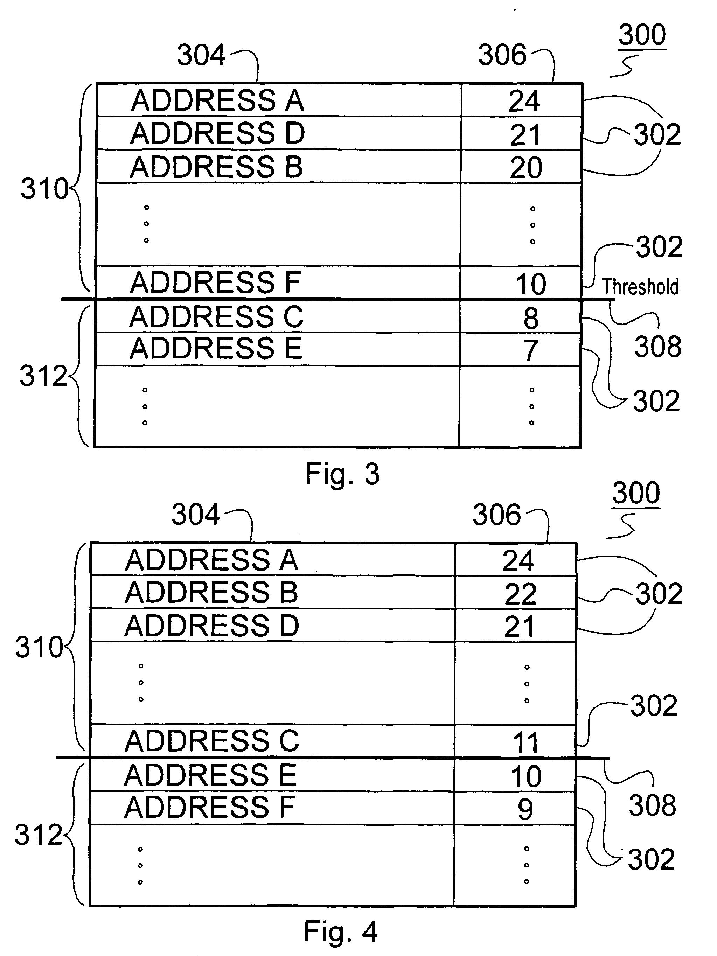

The entity addresses may be stored in a weighted stack 300 as shown in Figure 3. Each data entry 302 of weighted stack 300 comprises two parts. A first part 304 for storing an entity address, and a second part 306 for storing the current access profile value. The stack is ordered in accordance with the access profile value 306, with the higher access profile values being stored at the top of the stack. Within the weighted stack 300, there is a threshold 308. Addresses stored above this threshold 310 will be auto-cached, and addressed stored below the threshold 312 will not be auto-cached.

Referring now to Figure 4, there is illustrated an example of the weighted stack 300 after an update subsequent to client access to entities. In the particular example illustrated in Figure 4, the client has accessed ADDRESS B twice since the situation reflected in Figure 3. Consequently, ADDRESS B has now moved up a place in weighted stack 300, and ADDRESS D has been moved down a place since no further accesses have been made to it and its access count remains at 21. Additionally, ADDRESS C has been accessed three times since the time represented by the weighted stack illustrated in Figure 3, such that its access profile value is now 11. Not only has ADDRESS F not been accessed since the period reflected by the weighted stack illustrated in Figure 3, but has also not been accessed for a pre-set period resulting in its access profile value being reduced by 1 to 9. Furthermore, ADDRESS E has been accessed three times, thereby resulting in an access profile value of 10. Consequently, ADDRESS F has fallen to two places below threshold 308 in weighted stack 300. Meanwhile ADDRESS C is now just above threshold 308, whilst ADDRESS E is just below the threshold 308. Thus, a user access profile is built up and recorded in the weighted stack 300 in accordance with the number of accesses made to entity addresses.

The pre-set period after which no access has been made to a particular address such that the relevant access profile value is decreased may be any suitable period as determined by the user, for example one week, four weeks, six weeks, etc. Optionally, the another criterion may be used for determining decreasing the access profile value may be based on historical access trends, such that a value is given by Y*cache_access_frequency, where Y is a suitable number representing a time period or interval, for example a day, a week etc. If the value falls below a threshold value the the relevant access profile value is decreased. The cache_access_frequency is measured in the same time intervals.

The threshold 308 may be based on the number of sites which are to be auto-cached, such that a certain number of storage locations are available above the threshold, for example 20. Optionally, threshold 308 may be based on a minimum number of accesses to an address, for example 20, as recorded by the access profile value. Addresses having an access profile value exceeding the threshold 308 will be auto-cached, whilst addresses not exceeding the threshold will not be auto-cached.

Preferably, if an entity is accessed at an address which is an extension of an entity address that has already been weighted within the stack, then the pre-existing upper level address has its access profile value updated.

Entities that are accessed often by a user will typically be periodically updated. Such updates may be weekly or some other suitable period such as fortnightly or monthly.

Although entities updated at relatively long periods such as weekly, fortnightly etc are not accessed frequently by a user, they are nevertheless accessed regularly and a user would wish to have prompt access to them without delay. Thus, it is desirable that such sites are pre-cached. A problem exists, however, in that because of their relatively infrequent access to such sites, the address of such sites is likely to fall well below the threshold 308 of a weighted stack 300 as illustrated in Figures 3 and 4.

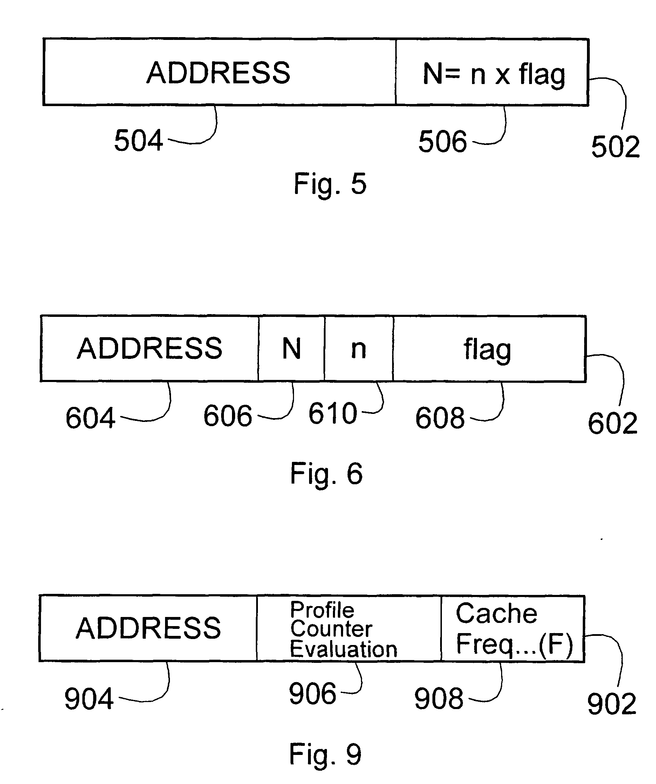

In order to address this problem, a second embodiment in accordance with the invention provides for a user-definable or automatically derivable flag to be included in a data entry for the stack 300. An example of a suitable data entry format 502 is illustrated in Figure 5. The data entry 502 comprises an address 504, and an access profile value storage area 506. The access profile value N is derived from the following relationship:

$$N = n \times flag,$$

where n is the number of actual accesses to the address stored in 504 and flag is a user-definable value, or automatically derived value, depending upon the typical periodicity of access to the address stored in location 504. For example, the falg may be automatically derived from the time interval since the last update of data for the entity. Such information may be obtained from "page info" entries for a webpage for example.

A user may define the flag to be equal to 1 for an address which is typically accessed once a day, whilst a flag may be set to 7 for weekly access or 31 for monthly access. In this manner, sites which are regularly accessed, but at relatively lengthy intervals, may still appear above threshold value 308 and be auto-cached.

Optionally, in accordance with a third embodiment of the invention, the data entry of a weighted stack may be formatted such that a flag defines a class of address having a respective threshold value for access before the access value profile can be updated. An example of a data entry format 602 in accordance with the third embodiment is illustrated in Figure 6. Data entry 602 comprises an address storage location 604 and an access profile value N storage location 606. A user-definable or automatically-definable flag is stored in location 608, and defines the class of the corresponding address stored in location 604.

Data entry format 602 also comprises a storage area 610 for storing an access counter, n, which is incremented by 1 each time the address stored in location 604 is accessed. The flag stored in 608 defines a threshold for access counter n. Each time that threshold value is achieved profile counter N is updated by 1, and access counter n is reset to zero. For example, a flag corresponding to an address which is likely to be accessed daily may define a threshold value of 20, one that is updated weekly a threshold value of 5 and one that is updated monthly a threshold value of 1.

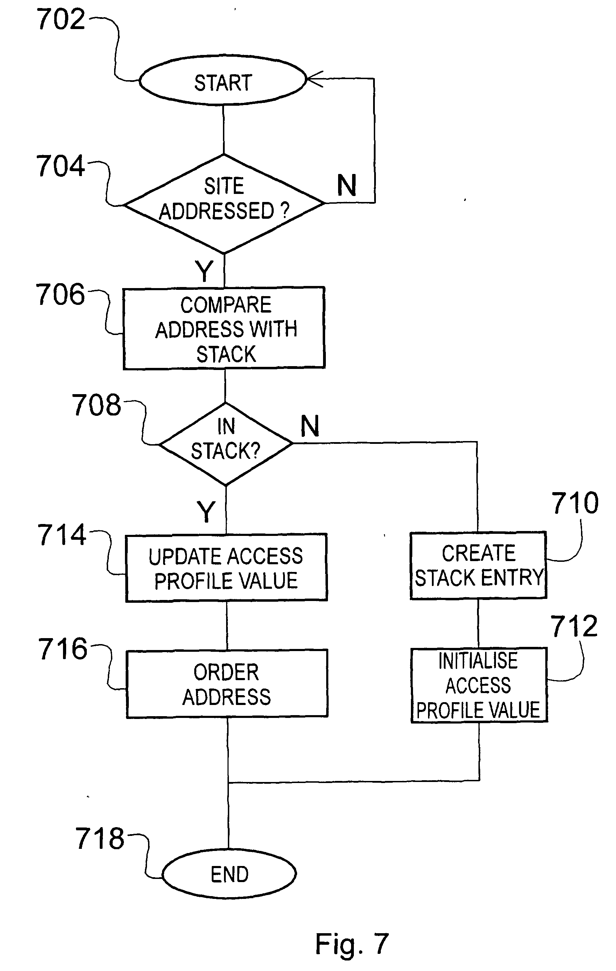

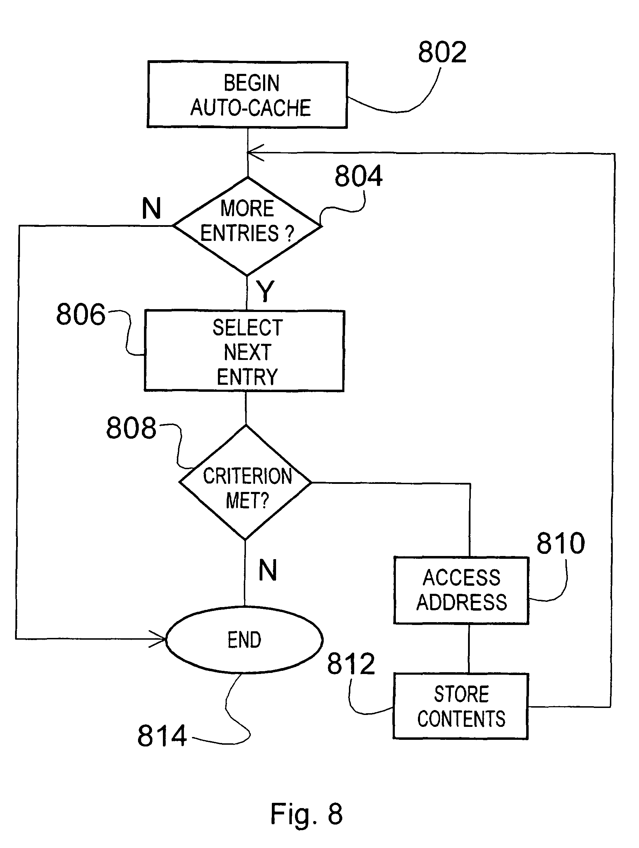

The operation of a suitable client module for monitoring and sorting entity addresses into an ordered sequence for determining which should be auto-cached and which should not, and for performing auto-caching, will now be described with reference to the flowcharts illustrated in Figure 7 and Figure 8.

The operation of a computer system in accordance with the flowchart of Figure 7 starts at step 702 and proceeds to step 704 where it is determined whether or not an Internet site has been addressed. If no, then the process flows back to the start at step 702. If yes then process control flows to step 706 where the address is compared with addresses waiting in stack 300, and at step 708 it is determined whether or not an entry exists in stack 300 for that address.

If no entry exists in the stack 300 then the process control flows to step 710 where the appropriate stack entry is created, and the step 712 the access profile value for the new stack is initialised.

If an entry were to exist for that address then the process control flows to step 714 where the access profile value is updated for that address. Next, step 716, the address is awarded within the stack, and then the process ends at step 718.

Turning now to Figure 8 there is illustrated a flow chart for the process of auto-caching contents of entities in accordance with a user access profile. Preferably the client module comprises software capable of configuring the client computer system to operate in accordance with the flowchart of Figure 8.

The computer system is configurable such that at a suitable time determined by the user or automatically in accordance with the user access profile, auto-caching is initiated, step 802. Next, step 804, the stack 300 is interrogated to determine whether or not there are more entries left for auto-caching. If the result of step 804 is no then process control flows to step 814 and the software module ceases operation. However, if the result of step 804 is yes, then process control flows to step 806 where the next entry in stack 806 is selected. At step 808, the entry is inspected to determine whether or not it meets the criterion, that is to say exceeds the threshold 308 or not. If not then process control flows to step 814 where it stops. If the criterion is met then process control flows to step 810 where the entity address corresponding to the stack entry is accessed, and at step 812 the contents are stored locally to the computer system for example, on the local hard disk drive. Process control then flows to step 804. The process ends at step 814.

In a preferred embodiment of the invention, the default option for auto-caching entity addresses is daily. However, as discussed above, some sites are periodical entities, for example weekly or monthly journals and consequently are often updated once a week or once a month. Such updating typically occurring on the same day of each week or month. Thus, it would be preferable not to auto-cache such sites on a daily basis, or a basis more often than the sites are updated.

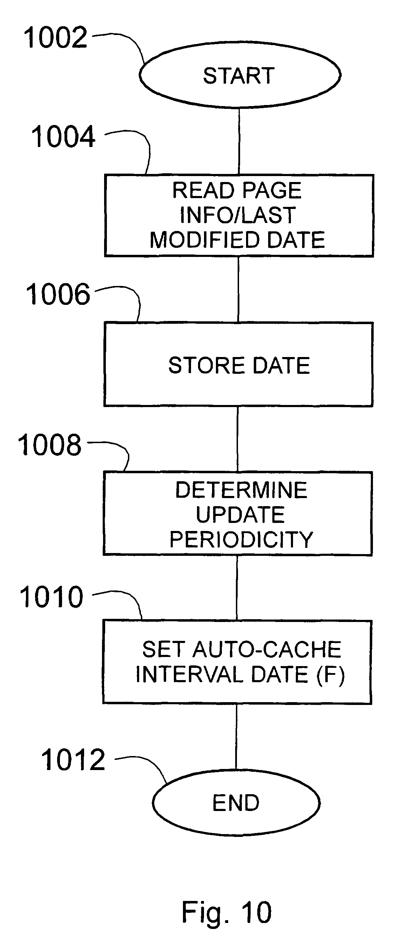

Associated with a web page, are details termed "page info" in which is included the last date/time on which the page was modified or updated. Additionally, each sub-file comprising a web page has an associated "last modified date" statement. The "page info" or "last modified date" statement may be utilised by a client module in accordance with a second aspect of the invention to identify the date/time on which the page or site was last updated. The client module may be configured to access the page info or last modified date statement in order to log it each time the address is accessed, and to determine the frequency at which modification or update of the entity/page occurs. The update or modification frequency can then be utilised to create an auto-cache frequency which may be included in a data entry such as one formatted as illustrated in Figure 9. The data entry format 902 comprises an address storage location 904, a profile counter evaluation storage location 906, which comprises the profile counter N, or any flags or access counters n in accordance with the second and third embodiments of the invention. Additionally, data entry format 902 comprises an auto-cache frequency storage location 908, in which the auto-cache frequency F is stored. The auto-cache frequency F will typically comprise the date and/or time for the next auto-caching of the corresponding address stored in location 904.

Typically, the frequency F will be determined to be the next day, or an hour or so later than the determined regular update derived from the page info or last modified date statement included in the entity/page. Optionally, a more suitable time for auto-caching the site/page may be defined.

The operation of a client module in accordance with a preferred embodiment of the invention for deriving an auto-cache frequency value F for an address will now be described with reference to the flowchart illustrated in Figure 10.

The process for determining an auto-cache frequency value F begins at step 1002 of the flowchart illustrated at Figure 10.

The process starts at step 1002 when an entity (webpage for example) has been accessed by the client computer system. At step 1004 the page information, or last modified date of the webpage is read, and the last modified date stored at step 1006. Next, step 1008, the periodicity of the updates for the entity is determined, by analysing the most recent updated date, and a set of historic updated dates.

The update periodicity may be calculated by determining the number of days since the entity was last modified and storing that number of days for a current access to the entity. Then the number of days obtained for the current update is subtracted from the number of days since last modification stored for a previous access. If the result is less than 1, then the periodicity is set to the most recently stored number of days since the last modification.

Next, step 1010, the auto-cache interval or date defining the auto-cache frequency value F is set, and the process ends at step 1012. Thus, it is possible to determine at what intervals auto-caching should be carried out, and also if there is sufficient information regarding the last modification, the time of day by which the auto-caching should be carried out in order to ensure the most up-to-date information has been cached.

In view of the foregoing description it will be evident to a person skilled in the art that various modifications may be made within the scope of the invention.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A method for operating a computer system linkable to at least one of a plurality of addressable entities in a computer network, the method comprising:

   deriving a count value corresponding to a number of accesses to an address associated with a one of said plurality of addressable entities; and
   automatically storing local to said computer system data comprising said one of a plurality of said addressable entities for said count value exceeding a threshold value, said automatically storing being initiated at a predetermined frequency in accordance with an update interval for said one of a plurality of addressable entities.

2. A method according to Claim 1, the step of deriving comprising:

   monitoring respective accesses to said one of said plurality of addressable entities; and
   updating a count value corresponding to said access to said one of a plurality of addressable entities.

3. A method according to Claim 2 further comprising determining a periodicity of access to said one of a plurality of addressable entities.

4. A method according to Claim 3 said step of updating said count value comprising updating said count value by an amount depending on said periodicity of access to said one of a plurality of addressable entities.

5. A method according to Claim 4, said step of updating said count value comprising updating said count value in count intervals greater than 1.

6. A method according to any one of Claims 2 to 5, said step of updating comprising increasing said count value.

7. A method according to any one of Claims 2 to 6, said step of updating further comprising decreasing said count value for a time period since a last access to said one of a plurality of addressable entities exceeding a predetermined time interval.

8. A method according to any one of claims 2 to 7, said exceeding a threshold value comprising said count value being a one of a group of highest count values.

9. A method according to any preceding Claim dependent on Claim 2, further comprising incrementing a second count value corresponding to accesses to said one of a plurality of addressable entities; and

   incrementing said value for said second count value exceeding a threshold value; and
   resetting said second count value to zero.

10. A method according to any preceding Claim, further comprising determining a regular time at which said entity is updated.

11. A method according to any preceding Claim, further comprising determining an update periodicity or time interval for said entity.

**12.** A computer program comprising machine implementable instructions for performing a method according to any one of Claims 1 to 11.

**13.** A carrier medium comprising a computer program according to Claim 12.

**14.** A carrier medium according to Claim 13, comprising memory means including a magnetic disk memory, an optical disk memory or a semiconductor memory.

**15.** An article of manufacture comprising a carrier medium according to Claim 13 or Claim 14.

**16.** A carrier medium according to Claim 13 or 14, comprising a radio frequency carrier wave or an optical carrier wave.

**17.** Apparatus operable to communicate with at least one of a plurality of addressable entities within a computer network, comprising:

> communication means for communicating with at least one of said plurality of addressable entities;
> means for deriving a count value corresponding to a number of accesses to said at least one of a plurality of addressable entities; and
> means for automatically storing local to said apparatus data comprising said one of a plurality of addressable entities for said count value exceeding a threshold value at a predetermined frequency in accordance with an update interval for said one of a plurality of addressable entities.

**18.** Apparatus according to Claim 17, further comprising:

> monitoring means for monitoring respective accesses to said one of a plurality of addressable entities;
> counter means; and
> means for updating said counter means corresponding to said access to said at least one of a plurality of addressable entities.

**19.** Apparatus according to Claim 18, further comprising means for determining a periodicity of access to said one of a plurality of addressable entities.

**20.** Apparatus according to Claim 19, wherein said means for updating said counter is operable to update said counter by an amount dependent on said periodicity of access to said one of a plurality of addressable entities.

**21.** Apparatus according to Claim 20, said updating means operable to update said counter in count intervals greater than 1.

**22.** Apparatus according to any one of Claims 18 to 21, further comprising second counting means, said second counting means operable to increase a second counter value corresponding thereto for respective accesses to said one of a plurality of addressable entities;

> said updating means operable to increment said counter for said second counter value exceeding a threshold; and
> said second counting means operable to reset said second counter value to zero for said second counter value exceeding said threshold.

**23.** Apparatus according to any one of Claims 18 to 21, said means for updating increasing said counter value for respective accesses to said one of a plurality of addressable entities.

**24.** Apparatus according to any one of Claims 18 to 23, said updating means operable to decrement said counter for a time period since a last access to said one of a plurality of addressable entities exceeding a predetermined time interval.

**25.** Apparatus according to any one of Claims 18 to 24, said exceeding a threshold value comprising said counter value being a one of a group of highest counter values.

**Patentansprüche**

**1.** Verfahren zum Betrieb eines Computersystems, das mit mindestens einer aus einer Mehrzahl von adressierbaren Einheiten in einem Computernetzwerk verbunden werden kann, wobei das Verfahren Folgendes umfasst:

> Ableitung eines Zählerwerts, der einer Anzahl von Zugriffen auf eine Adresse, die einer aus der Mehrzahl von adressierbaren Einheiten zugeordnet ist, entspricht; und

> automatische Speicherung von Daten, die diejenige aus der Mehrzahl von adressierbaren Einheiten umfassen, lokal auf dem Computersystem, wenn der Zählerwert einen Schwellwert überschreitet, wobei die automatische Speicherung bei einer vorbestimmten Häufigkeit in Übereinstimmung mit einem Aktualisierungsintervall für diejenige aus einer Mehrzahl von adressierbaren Einheiten initiiert wird.

2. Verfahren gemäß Anspruch 1, bei dem der Schritt der Ableitung Folgendes umfasst:

Überwachung entsprechender Zugriffe auf diejenige aus der Mehrzahl von adressierbaren Einheiten; und

Aktualisierung eines Zählerwerts, der dem Zugriff auf diejenige aus einer Mehrzahl von adressierbaren Einheiten entspricht.

3. Verfahren gemäß Anspruch 2, das ferner das Bestimmen einer Periodizität von Zugriff auf diejenige aus einer Mehrzahl von adressierbaren Einheiten umfasst.

4. Verfahren gemäß Anspruch 3, bei dem der Schritt der Aktualisierung des Zählerwerts eine Aktualisierung des Zählerwerts um einen Betrag, der von der Periodizität von Zugriff auf diejenige aus einer Mehrzahl von adressierbaren Einheiten abhängt, umfasst.

5. Verfahren gemäß Anspruch 4, bei dem der Schritt der Aktualisierung des Zählerwerts eine Aktualisierung des Zählerwerts in Zählerintervallen, die größer als 1 sind, umfasst.

6. Verfahren gemäß einem der Ansprüche 2 bis 5, bei dem der Schritt der Aktualisierung eine Erhöhung des Zählerwerts umfasst.

7. Verfahren gemäß einem der Ansprüche 2 bis 6, bei dem der Schritt der Aktualisierung ferner das Verringern des Zählerwerts umfasst, wenn ein Zeitraum seit einem letzten Zugriff auf diejenige aus einer Mehrzahl von adressierbaren Einheiten ein vorbestimmtes Zeitintervall überschreitet.

8. Verfahren gemäß einem der Ansprüche 2 bis 7, bei dem das Überschreiten eines Schwellwerts umfasst, dass der Zählerwert einer aus einer Gruppe von höchsten Zählerwerten ist.

9. Verfahren gemäß einem der vorhergehenden Ansprüche abhängig von Anspruch 2, ferner umfassend die Erhöhung eines zweiten Zählerwerts, der Zugriffen auf diejenige aus einer Mehrzahl von adressierbaren Einheiten entspricht; und
die Erhöhung des Werts, wenn der zweite Zählerwert einen Schwellwert überschreitet; und
das Zurücksetzen des zweiten Zählerwerts auf Null.

10. Verfahren gemäß einem der vorhergehenden Ansprüche, das ferner die Bestimmung einer planmäßigen Zeit, zu der die Einheit aktualisiert wird, umfasst.

11. Verfahren gemäß einem der vorhergehenden Ansprüche, das ferner die Bestimmung einer Periodizität oder eines Zeitintervalls zur Aktualisierung der Einheit umfasst.

12. Computerprogramm, das maschinenimplementierbare Anweisungen zur Ausführung eines Verfahrens gemäß einem der Ansprüche 1 bis 11 umfasst.

13. Trägermedium, das ein Computerprogramm gemäß Anspruch 12 umfasst.

14. Trägermedium gemäß Anspruch 13, das Speichermittel umfasst, einschließlich eines Magnetplattenspeichers, eines optischen Plattenspeichers oder eines Halbleiterspeichers.

15. Herstellungsartikel, der ein Trägermedium gemäß Anspruch 13 oder Anspruch 14 umfasst.

16. Trägermedium gemäß Anspruch 13 oder 14, das eine Radiofrequenzträgerwelle oder eine optische Trägerwelle umfasst.

17. Vorrichtung, die betrieben werden kann, um mit mindestens einer aus einer Mehrzahl von adressierbaren Einheiten innerhalb eines Computernetzwerks zu kommunizieren, umfassend:

Kommunikationsmittel zur Kommunikation mit mindestens einer aus der Mehrzahl von adressierbaren Einheiten;

Mittel zur Ableitung eines Zählerwerts, der einer Anzahl von Zugriffen auf die mindestens eine aus einer Mehrzahl von adressierbaren Einheiten entspricht; und

Mittel zur automatischen Speicherung von Daten, die diejenige aus einer Mehrzahl von adressierbaren Einheiten umfassen, lokal auf der Vorrichtung, wenn der Zählerwert einen Schwellwert überschreitet, bei einer vorbestimmten Häufigkeit in Übereinstimmung mit einem Aktualisierungsintervall für diejenige aus einer Mehrzahl von adressierbaren Einheiten.

18. Vorrichtung gemäß Anspruch 17, ferner umfassend:

Überwachungsmittel zur Überwachung entsprechender Zugriffe auf diejenige aus einer Mehrzahl von adressierbaren Einheiten;

Zählermittel; und

Mittel zur Aktualisierung des Zählermittels entsprechend dem Zugriff auf die mindestens eine aus einer Mehrzahl von adressierbaren Einheiten.

19. Vorrichtung gemäß Anspruch 18, die ferner Mittel zur Bestimmung einer Periodizität von Zugriff auf diejenige aus einer Mehrzahl von adressierbaren Einheiten umfasst.

20. Vorrichtung gemäß Anspruch 19, bei der das Mittel zur Aktualisierung des Zählers betrieben werden kann, um den Zähler um einen Betrag zu erhöhen, der von der Periodizität von Zugriff auf diejenige aus einer Mehrzahl von adressierbaren Einheiten abhängt.

21. Vorrichtung gemäß Anspruch 20, bei der das Aktualisierungsmittel betrieben werden kann, um den Zähler in Zählerintervallen, die größer als 1 sind, zu aktualisieren.

22. Vorrichtung gemäß einem der Ansprüche 18 bis 21, das ferner ein zweites Zählermittel umfasst, bei der das zweite Zählermittel betrieben werden kann, um einen zweiten Zählerwert, der entsprechenden Zugriffen auf diejenige aus einer Mehrzahl von adressierbaren Einheiten entspricht, zu erhöhen; bei der das Aktualisierungsmittel betrieben werden kann, um den Zähler zu erhöhen, wenn der zweite Zählerwert einen Schwellwert überschreitet; und bei der das zweite Zählermittel betrieben werden kann, um den zweiten Zählerwert auf Null zurückzusetzen, wenn der zweite Zählerwert die Schwelle überschreitet.

23. Vorrichtung gemäß einem der Ansprüche 18 bis 21, bei der das Mittel zur Aktualisierung den Zählerwert für entsprechende Zugriffe auf diejenige aus einer Mehrzahl von adressierbaren Einheiten erhöht.

24. Vorrichtung gemäß einem der Ansprüche 18 bis 23, bei der das Aktualisierungsmittel betrieben werden kann, um den Zähler zu dekrementieren, wenn ein Zeitraum seit einem letzten Zugriff auf diejenige aus einer Mehrzahl von adressierbaren Einheiten ein vorbestimmtes Zeitintervall überschreitet.

25. Vorrichtung gemäß einem der Ansprüche 18 bis 24, bei der das Überschreiten eines Schwellwerts umfasst, dass der Zählerwert einer aus einer Gruppe von höchsten Zählerwerten ist.

## Revendications

1. Procédé permettant de faire fonctionner un système informatique pouvant être relié à au moins une d'une pluralité d'entités adressables dans un réseau informatique, le procédé comprenant les étapes consistant à :

   dériver une valeur de comptage correspondant à un certain nombre d'accès à une adresse associée à une de ladite pluralité d'entités adressables ; et
   enregistrer automatiquement en local sur ledit système informatique des données comprenant ladite une d'une pluralité desdites entités adressables pour ladite valeur de comptage dépassant une valeur de seuil, ladite étape d'enregistrement automatique étant initiée à une fréquence prédéterminée en fonction d'un intervalle de mise à jour pour ladite une d'une pluralité d'entités adressables.

2. Procédé selon la revendication 1, l'étape de dérivation comprenant les étapes consistant à :

   surveiller des accès respectifs à ladite une de ladite pluralité d'entités adressables ; et
   mettre à jour une valeur de comptage correspondant au dit accès à ladite une d'une pluralité d'entités adressables.

3. Procédé selon la revendication 2 comprenant en outre l'étape consistant à déterminer une périodicité d'accès à ladite une d'une pluralité d'entités adressables.

4. Procédé selon la revendication 3 dans lequel ladite étape de mise à jour de ladite valeur de comptage comprend la mise à jour de ladite valeur de comptage d'une quantité dépendant de ladite périodicité d'accès à ladite une d'une pluralité d'entités adressables.

5. Procédé selon la revendication 4 dans lequel ladite étape de mise à jour de ladite valeur de comptage comprend la mise à jour de ladite valeur de comptage selon des intervalles de comptage plus grands que 1.

6. Procédé selon l'une quelconque des revendications 2 à 5 dans lequel ladite étape de mise à jour comprend l'augmentation de ladite valeur de comptage.

7. Procédé selon l'une quelconque des revendications 2 à 6 dans lequel ladite étape de mise à jour comprend en outre la diminution de ladite valeur de comptage d'une période de temps depuis un dernier accès à ladite une d'une pluralité d'entités adressables dépassant un intervalle de temps prédéterminé.

8. Procédé selon l'une quelconque des revendications 2 à 7, ledit dépassement d'une valeur de seuil comprenant le fait que ladite valeur de comptage est une valeur d'un groupe de valeurs de comptage les plus élevées.

9. Procédé selon l'une quelconque des revendications précédentes dépendantes de la revendication 2, comprenant en outre l'étape consistant à augmenter une seconde valeur de comptage correspondant à des accès à ladite une d'une pluralité d'entités adressables ; et
augmenter ladite valeur pour ladite seconde valeur de comptage dépassant une valeur de seuil ; et remettre à zéro ladite seconde valeur de comptage.

10. Procédé selon l'une quelconque des revendications précédentes, comprenant en outre l'étape consistant à déterminer un moment régulier auquel ladite entité est mise à jour.

11. Procédé selon l'une quelconque des revendications précédentes, comprenant en outre l'étape consistant à déterminer une périodicité de mise à jour ou un intervalle de temps pour ladite entité.

12. Programme informatique comprenant des instructions exécutables par une machine, pour exécuter un procédé selon l'une quelconque des revendications 1 à 11.

13. Support d'enregistrement comprenant un programme informatique selon la revendication 12.

14. Support d'enregistrement selon la revendication 13, comprenant des moyens d'enregistrement comprenant une mémoire à disque magnétique, une mémoire à disque optique ou une mémoire à semi-conducteurs.

15. Article de fabrication comprenant un support d'enregistrement selon la revendication 13 ou 14.

16. Support d'enregistrement selon la revendication 13 ou 14, comprenant une onde porteuse radio fréquence ou une onde porteuse optique.

17. Appareil pouvant être utilisé pour communiquer avec au moins une d'une pluralité d'entités adressables à l'intérieur d'un réseau informatique, l'appareil comprenant :

   des moyens de communication pour communiquer avec au moins une de ladite pluralité d'entités adressables ;

   des moyens pour dériver une valeur de comptage correspondant à un certain nombre d'accès à ladite au moins une d'une pluralité d'entités adressables ; et

   des moyens pour enregistrer automatiquement en local sur ledit appareil des données comprenant ladite une d'une pluralité d'entités adressables pour ladite valeur de comptage dépassant une valeur de seuil à une fréquence prédéterminée en fonction d'un intervalle de mise à jour pour ladite une d'une pluralité d'entités adressables.

18. Appareil selon la revendication 17, comprenant en outre :

   des moyens de surveillance pour surveiller des accès respectifs à ladite une d'une pluralité d'entités adressables ;
   des moyens formant compteur ; et
   des moyens pour mettre à jour lesdits moyens formant compteur correspondant au dit accès à ladite au moins une d'une pluralité d'entités adressables.

19. Appareil selon la revendication 18, comprenant en outre des moyens pour déterminer une périodicité d'accès à ladite une d'une pluralité d'entités adressables.

20. Appareil selon la revendication 19, dans lequel lesdits moyens pour mettre à jour ledit compteur peuvent être utilisés pour mettre à jour ledit compteur d'une quantité dépendant de ladite périodicité d'accès à ladite une d'une pluralité d'entités adressables.

21. Appareil selon la revendication 20 dans lequel lesdits moyens de mise à jour peuvent être utilisés pour mettre à jour ledit compteur selon des intervalles de comptage plus grands que 1.

22. Appareil selon l'une quelconque des revendications 18 à 21, comprenant en outre des seconds moyens de comptage, lesdits seconds moyens de comptage pouvant être utilisés afin d'augmenter une seconde valeur de comptage correspondante à ceux-ci pour des accès respectifs à ladite une d'une pluralité d'entités adressables ;
lesdits moyens de mise à jour pouvant être utilisés pour augmenter ledit compteur pour ladite seconde valeur de comptage dépassant un seuil ; et
lesdits seconds moyens de comptage pouvant être utilisés pour remettre à zéro ladite seconde valeur de comptage pour ladite seconde valeur de comptage dépassant ledit seuil.

23. Appareil selon l'une quelconque des revendications 18 à 21, lesdits moyens de mise à jour augmentant ladite valeur de comptage pour des accès respectifs à ladite une d'une pluralité d'entités adressables.

**24.** Appareil selon l'une quelconque des revendications 18 à 23, lesdits moyens de mise à jour pouvant être utilisés pour diminuer ledit compteur d'une période de temps depuis un dernier accès à ladite une d'une pluralité d'entités adressables dépassant un intervalle de temps prédéterminé.

**25.** Appareil selon l'une quelconque des revendications 18 à 24 dans lequel ledit dépassement d'une valeur de seuil comprend le fait que ladite valeur de comptage est une valeur d'un groupe de valeurs de comptage les plus élevées.

Fig. 1

Fig. 2

Fig. 3

Fig. 4

| ADDRESS | N= n x flag |
|---------|-------------|

504  506  502

Fig. 5

| ADDRESS | N | n | flag |
|---------|---|---|------|

604  606  610  608  602

Fig. 6

| ADDRESS | Profile Counter Evaluation | Cache Freq...(F) |
|---------|----------------------------|------------------|

904  906  908  902

Fig. 9

702

START

704

SITE
ADDRESSED ?　　N

Y

706

COMPARE
ADDRESS WITH
STACK

708

IN
STACK?　　N

Y

714

UPDATE ACCESS
PROFILE VALUE

710

CREATE
STACK ENTRY

716

ORDER
ADDRESS

712

INITIALISE
ACCESS
PROFILE VALUE

718

END

Fig. 7

Fig. 8

1002 — START

1004 — READ PAGE INFO/LAST MODIFIED DATE

1006 — STORE DATE

1008 — DETERMINE UPDATE PERIODICITY

1010 — SET AUTO-CACHE INTERVAL DATE (F)

1012 — END

Fig. 10